Europäisches Patentamt

European Patent Office

Office européen des brevets

(19)

(11) Veröffentlichungsnummer: **0 038 475**

**A2**

(12) **EUROPÄISCHE PATENTANMELDUNG**

(21) Anmeldenummer: 81102677.2

(22) Anmeldetag: 09.04.81

(51) Int. Cl.³: **H 01 B 17/40**
**F 16 G 11/04**

(30) Priorität: 16.04.80 DE 3014601

(43) Veröffentlichungstag der Anmeldung:
28.10.81 Patentblatt 81/43

(84) Benannte Vertragsstaaten:
AT BE CH FR GB IT LI LU NL SE

(71) Anmelder: Karl Pfisterer Elektrotechnische
Spezialartikel GmbH & Co. KG
Augsburger Strasse 375
D-7000 Stuttgart 60(DE)

(72) Erfinder: Höckele, Max
Fichtenstrasse 3
D-7061 Berglen(DE)

(72) Erfinder: Dalferth, Günter
Bächlenweg 26
D-7000 Stuttgart(DE)

(74) Vertreter: Patentanwälte Dr. Wolff; H. Bartels
Dipl.-Chem. Dr. Brandes Dr.-Ing. Held; Dipl.-Phys. Wolff
Lange Strasse 51
D-7000 Stuttgart 1(DE)

(54) Armatur zur Herstellung einer mit hoher Zugkraft belastbaren Verbindung mit einem glasfaserverstärkten Kunststoffstab.

(57) Eine Armatur zur Herstellung einer mit hoher Zugkraft belastbaren Verbindung mit einem glasfaserverstärkten Kunststoffstab (1), insbesondere einem Isolatorstab für Hochspannungs-Freileitungen, weist neben einer den Endabschnitt des Kunststoffstabes erfassenden ersten Klemme (2; 102; 202) auf deren vom benachbarten Ende des Isolatorstabes (1; 101; 201) wegweisenden Seite eine Klemmhülse (3; 103; 203) einer Konusklemme (3,6; 103,106;203,206) auf. Das die Klemmhülse (3; 103) aufnehmende Gehäuse (6; 106; 206) dieser Konusklemme ist als Zugkraftübertragungsglied ausgebildet. Die Klemmhülse (3; 103, 203) und die erste Klemme (2; 102; 202) stützen sich zumindest mittelbar in axialer Richtung aufeinander ab.

Fig.1

0038475

13.2.1980
3322 rrp
Reg.-Nr. 126 108

KARL PFISTERER ELEKTROTECHNISCHE SPEZIALARTIKEL GMBH & CO KG.,
7000 Stuttgart 60 (Baden-Württemberg)

---

Armatur zur Herstellung einer mit hoher Zugkraft belastbaren
Verbindung mit einem glasfaserverstärkten Kunststoffstab.

---

Die Erfindung betrifft eine Armatur zur Herstellung einer mit
hoher Zugkraft belastbaren Verbindung mit einem glasfaserverstärkten Kunststoffstab, insbesondere einem Isolatorstab für
Hochspannungs-Freileitungen, mit einer den Endabschnitt des
Kunststoffstabes erfassenden Klemme.

Da die Zugbelastbarkeit glasfaserverstärkter Kunststoffstäbe,
bezogen auf ihre Querschnittsfläche, sehr groß ist, muß die
Armatur eine sehr hohe Klemmkraft auf den Stab ausüben, wenn
dessen Zugbelastbarkeit ausgenutzt werden soll. Insbesondere
gilt dies dann, wenn die Länge der Armatur möglichst gering
sein soll. Man hat deshalb versucht, statt einer Armatur, die eine Konusklemme bildet, eine solche in der Art einer Preßklemme zu verwenden, da sich

0038475

mit letzterer sehr hohe Klemmkräfte und damit auch eine hohe Haltekraft erreichen lassen. Von erheblichem Nachteil ist jedoch bei diesen Armaturen, daß mit der Zeit die Haltekraft stark abfällt, was dazu führen kann, daß trotz der in der Regel erheblich unter der Bruchlast liegenden Betriebslast des Kunststoffstabes dieser nicht mehr sicher festgehalten wird.

Der Erfindung liegt die Aufgabe zugrunde, eine Armatur zur Herstellung einer zugfesten Verbindung mit einem glasfaserverstärkten Kunststoffstab zu schaffen, die nicht nur eine hohe Haltekraft zu erzeugen vermag, sondern auch in der Lage ist, die Haltekraft über lange Zeiträume hinweg aufrechtzuerhalten. Diese Aufgabe löst eine Armatur mit den Merkmalen des Anspruches 1.

Die erfindungsgemäße Lösung geht von der Überlegung aus, daß ein sicheres Festhalten eines glasfaserverstärkten Kunststoffstabes auch über lange Zeiträume hinweg eine Klemmvorrichtung erfordert, die ihre Haltekraft selbsttätig auf die wirksame Zugbelastung abstimmt, damit die Haltekraft nie unter den zur Übertragung der Zugkraft erforderlichen Mindestwert absinken kann. Diese Forderung erfüllt die erfindungsgemäße Armatur, weil die Klemmhülse an der ersten Klemme abgestützt ist und deshalb in das sie aufnehmende Gehäuse im Sinne einer Erhöhung der Haltekraft gedrückt wird, falls der Kunststoffstab nicht oder nicht mehr allein von der Klemmhülse festgehalten werden kann. Man kann hierbei die Haltekräfte der ersten Klemme und Konusklemme so wählen, daß die erste Klemme normalerweise nicht an der Übertragung der Zugkraft vom Kunststoffstab auf die Armatur beteiligt ist/ sondern nur dann, wenn der Kunststoffstab von der Konusklemme nicht mehr festgehalten werden kann, und nur solange, bis die Haltekraft der Konusklemme durch den von der Klemmhülse bewirkten Schub auf einen ausreichenden Wert erhöht worden ist. Es ist aber auch möglich, die erste Klemme ständig oder von einer bestimmten Zugbelastung an ständig an der Übertragung der Zugkräfte beteiligen, da bei allen diesen Möglichkeiten durch die Abstützung der ersten Klemme auf der Klemmhülse selbsttätig eine Haltekrafterhöhung eintritt, wenn die Zugbelastung der ersten Klemme einsetzt oder zunimmt. Ein weiterer, wichtiger Vorteil der erfindungsgemäßen Lösung besteht darin, daß der Konuswinkel der Konusklemme nicht in dem eine Selbsthemmung ergebenden Bereich liegen muß, sondern auch größer gewählt werden kann, weil die Abstützung der Klemmhülse an der ersten Klemme auch dann ein Lösen der Konusklemme verhindert, wenn keine Selbsthemmung vorhanden ist. Ein Konuswinkel, der keine Selbsthemmung ergibt, ist beispielsweise dann von Vorteil, wenn der spezifische Druck, den die Klemmhülse auf den Kunststoffstab ausübt, stets so gering wie möglich gehalten werden soll, um eine Beschädigung des Außenmantels des Kunststoffstabes durch die Klemmhülse zu verhindern oder soweit wie möglich zu vermeiden. Sofern keine Selbsthemmung vorhanden ist, steigt nämlich die Haltekraft und damit der spezifische Klemmendruck mit der Zugbelastung nur im erforderlichen Umfange an und nimmt dann wieder mit fallender Zugbelastung ab. Weiterhin erlaubt es die Möglichkeit, den Konuswinkel in relativ weiten Grenzen wählen zu können, die axiale Länge der Armatur und den spezifischen Klemmdruck der Klemmhülse an die Erfordernisse anzupassen. Soll beispielsweise für einen Isolatorstab die axiale Länge der Armatur möglichst gering sein, so kann durch einen entsprechend großen Konuswinkel verhindert werden, daß der spezifische Druck, den die Klemmenhülse auf die Außenmantelfläche des Isolatorstabes ausübt, nicht zu groß wird und den Außenmantel in unzulässigem Maße beschädigt.

Vorzugsweise ist die erste Klemme eine hülsenförmige Preßklemme, da eine solche Klemme in einfacher Weise auf dem Kunststoffstab festgeklemmt werden kann und im Vergleich zu ihrer Haltekraft wenig Raum, insbesondere eine geringe Länge, benötigt. Außerdem läßt sich mit einer Preßhülse ohne Schwierigkeiten die notwendige Haltekraft erreichen.

Vor allem bei Kunststoffstäben mit relativ großem Durchmesser ist es in der Regel vorteilhafter, nicht den Innendurchmesser beider Klemmvorrichtungen an den Außendurchmesser des Kunststoffstabes anzupassen, sondern den Innendurchmesser der durch die Preßhülse gebildeten ersten Klemmvorrichtung kleiner zu

- 4 -

wählen. Dies macht zwar ein entsprechendes Absetzen des Kunststoffstabes an seinem Ende notwendig. Es hat sich aber gezeigt,
daß dann, wenn der Kunststoffstab nicht nur im Bereich seiner
äußeren Mantelfläche, sondern auch im Bereich einer weiter
innen liegenden Fläche erfasst wird, die Preßkraft der Armatur
noch besser in die gewünschte Haltekraft umgesetzt wird.

Die die erste Klemmvorrichtung bildende Preßklemme und die
Klemmhülse der zweiten Klemmvorrichtung sind vorzugsweise zwei
getrennte Bauelemente. Es ist aber auch eine einstückige Ausbildung möglich, da nur wesentlich ist, daß eine gegenseitige
Abstützung erfolgen kann. Bei einer einstückigen Ausbildung
braucht auf die richtige gegenseitige Anordnung von Preßklemme und Klemmhülse bei der Montage keine besondere Sorgfalt verwendet zu werden.

Bei einer bevorzugten Ausführungsform ist die Klemmhülse mit
mehreren über den Umfang verteilt angeordneten und in radialen
Ebenen liegenden Längsschlitzen versehen, von denen nur einer
sich über die gesamte Länge der Klemmhülse erstreckt. Die anderen enden in geringem Abstand vom einen Ende, so daß hier
noch ein Zusammenhang aller Teile der Hülse vorhanden ist.

Es ist auch zweckmäßig, dafür Sorge zu tragen, daß im Bereich
des gegen die Klemmhülse weisenden Endes der Preßhülse deren
Klemmkraft vermindert ist und daß die Klemmkraft der Klemmhülse zu deren freiem Ende hin ebenfalls abnimmt, was beispielsweise durch einen sich leicht vergrößernden Innendurchmesser oder aber durch einen verminderten Konuswinkel in
diesem Endabschnitt erreicht werden kann.

Falls es notwendig ist, das elektrische Feld an dem zur Stabmitte weisenden Ende der Armatur abzusteuern, kann dies mittels einer leitfähigen Schicht erreicht werden, welche in eine
Ringzone auf den Kunststoffstab aufgebracht wird, die teils
im Inneren und teils außerhalb der Armatur liegt. Ferner ist
es in der Regel zweckmäßig, Maßnahmen zu treffen, um zu ver-

- 5 -

hindern, daß Feuchtigkeit zu den Stirnflächen des Kunststoffstabes gelangen kann. Anstelle einer Versiegelung der Stabenden mit einem Lack oder dgl. oder zusätzlich zu dieser Maßnahme kann man Dampfsperren vorsehen, welche sowohl das Eindringen von Feuchtigkeit in die Armatur längs der Staboberfläche verhindern als auch zwischen der Außenhülse und dem sie umgebenden, topfartigen Teil des Abspannorgans hindurch. Im letztgenannten Falle kann man eine Dampfsperre mittels eines Dichtungsringes realisieren. Man kann aber auch beispielswiese eine Dichtungsmasse in das Gewinde einbringen, welches die Außenhülse mit dem topfartigen Teil verbindet.

Im folgenden ist die Erfindung anhand von drei in der Zeichnung dargestellten Ausführungsbeispielen im einzelnen erläutert. Es zeigen:

Fig. 1    einen Längsschnitt des ersten Ausführungsbeispiels im montierten Zustand,

Fig. 2    einen Längsschnitt der Preßklemme und der Konushülse des ersten Ausführungsbeispiels vor dem Festklemmen auf dem Kunststoff,

Fig. 3    eine Stirnansicht der Preßklemme und der Konushülse vor der Montage,

Fig. 4    einen Längsschnitt eines zweiten Ausführungsbeispiels im montierten Zustand,

Fig. 5    einen Längsschnitt eines dritten Ausführungsbeispiels im montierten Zustand.

Eine Abspannarmatur für einen Abspannisolator, der durch einen glasfaserverstärkten Kunststoffstab 1 gebildet wird, weist eine Preßklemme 2 auf, die vor dem Verpressen die Form einer zylindrischen Hülse hat. Der Innendurchmesser der Preßklemme 2 ist kleiner als der Außendurchmesser des Kunststoffstabes 1, nämlich im Ausführungsbeispiel etwa halb so groß, was bedeutet, daß der Kunststoffstab vor der Montage der Armatur an seinem einen Ende auf einer Länge, die etwas größer ist als die axiale Länge der Preßklemme, in seinem Durchmesser entsprechend vermindert werden muß. Die axiale Länge der Preßklemme 2 ist etwa drei bis vier Mal so groß wie ihr Innendurchmesser. Dadurch, daß der Endabschnitt, den die Preßklemme 2 erfaßt, im Durchmesser verkleinert ist, läßt sich auch bei einem relativ großen Außendurchmesser des Kunststoffstabes die Klemmkraft der Armatur gut in die zu erzielende Haltekraft umsetzen.

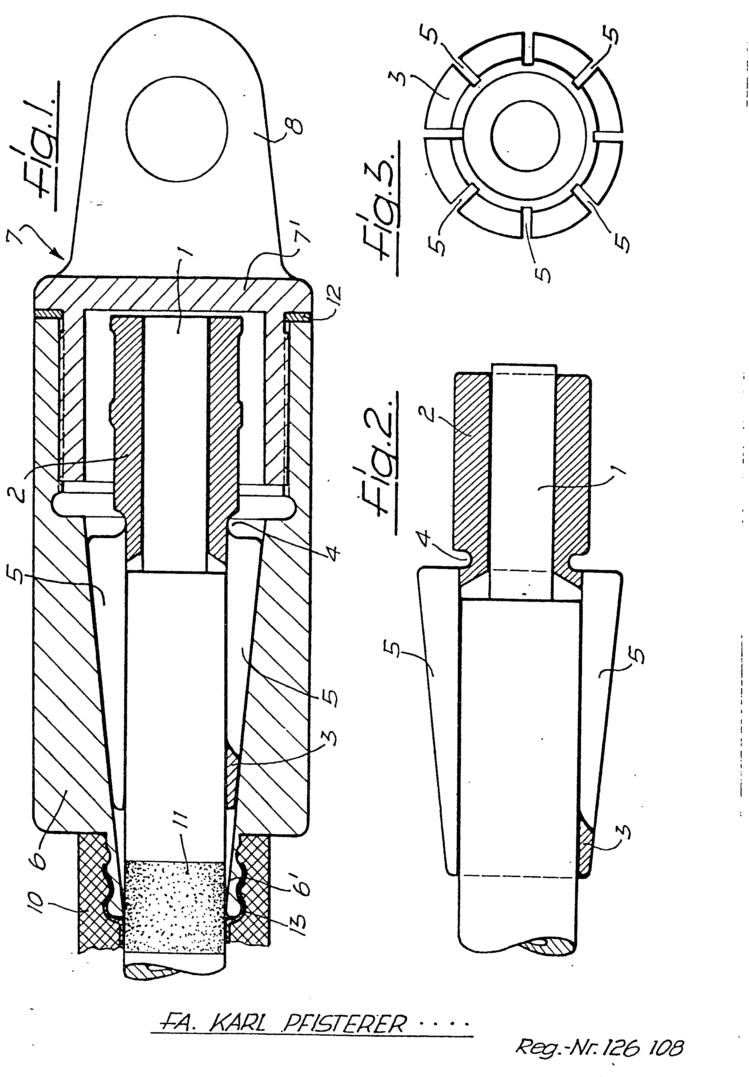

Die aus AlMgSiF20 also einer relativ weichen Aluminiumlegierung, bestehende Preßklemme 2 ist im Ausführungsbeispiel einstückig mit einer zu ihr gleichachsig angeordneten Konushülse ausgebildet, könnte aber auch ein separates Element sein. Die Konushülse 3 ist innen zylindrisch und der Innendurchmesser ist an den vollen Außendurchmesser des Kunststoffstabes 1 angepaßt. Die Übergangszone zwischen der Preßklemme 2 und der Konushülse 3 hat, wie die Fig. 1 und 2 zeigen, durch eine nach außen offene Ringnut 4 mit ausgerundetem Grund einen gegenüber der Preßklemme verkleinerten Durchmesser. Ferner vergrößert sich der Innendurchmesser im Bereich der Übergangszone etwas von der Preßklemme 2 gegen die Konushülse 3 hin. Schließlich ist, wie die Fig. 1 und 2 zeigen, die Schulter am Übergang der Innenmantelfläche zur Konushülse konisch ausgebildet. Durch diese Maßnahmen wird erreicht, daß beim Verpressen der Preßklemme 2 die Klemmkraft gegen das sich an die Konushülse 3 anschließende Ende hin automatisch so weit vermindert wird, daß der Kunststoffstab 1 am Auslauf aus der Klemme keine störende Beschädigung erfährt.

Die Konushülse 3, deren Länge etwa 2 1/2 Mal so groß ist wie ihr Innendurchmesser und deren im Durchmesser größeres Ende sich an die Übergangszone anschließt, bildet einen Außenkonus mit einem relativ großen Konuswinkel, der im Bereich von 6° liegt, also keine Selbsthemmung mehr ergibt. Die auf den Kunststoffstab ausgeübte Druckkraft hängt deshalb von der Zugbelastung ab, nimmt also mit steigender Zugbelastung zu und
mit abnehmender Zugbelastung ab. Wie Fig. 3 zeigt, ist die
Konushülse 3 mit gleichmäßig auf dem Umfang verteilt angeordneten, in radialen Ebenen liegenden Längsschlitzen 5
versehen, von denen sich nur einer über die gesamte Länge
der Konushülse erstreckt. Die übrigen Längsschlitze 5 enden
in geringem Abstand von dem verjüngten Hülsenende. Hier
sind also alle Teile der Konushülse 3 miteinander verbunden.
Gegen das freie Ende der Konushülse 3 hin nimmt ihr Innendurchmesser etwas zu, um den Klemmdruck im Bereich des Auslaufs zu reduzieren.

Die Konushülse 3 bildet zusammen mit einer sie aufnehmenden,
metallischen Außenhülse 6 eine Konusklemme. Damit die Außenhülse 6 auch die Preßklemme 2 aufnehmen kann, ist ihre
axiale Länge etwa gleich der axialen Länge des die Preßklemme 2 und die Konushülse 3 bildenden Körpers. Der eine,
im montierten Zustand die Preßklemme 2 aufnehmende Abschnitt der Außenhülse 6, dessen Länge etwa gleich der Länge
der Preßklemme ist, ist mit einem Innengewinde versehen und
hat einen Außendurchmesser, der größer ist als der Außendurchmesser der Preßhülse. In dem sich anschließenden, die Übergangszone und die Konushülse 3 aufnehmenden Abschnitt bildet
die Innenmantelfläche der Außenhülse 6 einen Innenkonus mit
einem an den Außenkonus der Konushülse 3 angepaßten Winkel.

An dem das verjüngte Ende der Konushülse 3 umgebenden Ende
der Außenhülse 3 weist diese einen stutzenartigen Fortsatz
6' mit verkleinertem Außendurchmesser auf, dessen Innendurchmesser an den Außendurchmesser des Kunststoffstabes 1
angepaßt ist. Die Außenmantelfläche dieses Fortsatzes 6' ist
mit flachen Ringnuten versehen, damit sich eine gute Verbindung mit einer den Kunststoffstab 1 umgebenden und den
Fortsatz 6' übergreifenden Umhüllung 1o aus Silikonkautschuk
erreichen läßt.

Ein Abspannorgan 7 weist eine Trägerplatte 7' auf, deren Außendurchmesser an denjenigen der Außenhülse 6 angepaßt ist. Von
der einen Stirnseite der Trägerplatte 7' steht konzentrisch
ein rohrförmiger, mit einem Außengewinde versehener Teil ab,
der in das Innengewinde der Außenhülse 6 eingeschraubt wird und
im eingeschraubten Zustand die Preßklemme 2 im Abstand umgibt.
An die andere Stirnseite ist eine Lasche 8 angeformt.

Bei der Montage der Armatur wird zunächst die Außenhülse 6
über das mittels der Armatur zu erfassende Ende geschoben,
falls es nicht möglich ist, die Außenhülse vom anderen Ende des
Kunststoffstabes her aufzuschieben, nachdem zuvor eine Ringzone
des Kunststoffstabes 1, die nach der Montage teilweise im
Inneren des Fortsatzes 6' und teilweise außerhalb desselben
liegt, mit einer Leitlackschicht 11 versehen worden ist. Sodann
wird der die Konushülse 3 und die Preßklemme 2 bildende Körper auf dieses Stabende so aufgeschoben, daß, wie Fig. 2 zeigt,
noch ein Zwischenraum zwischen der Schulter des Kunststoffstabes 1 am Übergang zu dem abgesetzten Endabschnitt und der Innenschulter der Übergangszone vorhanden ist. Danach wird die
Preßklemme 2 mittels eines Preßwerkzeuges verpreßt. Nach dem
Verpressen der Preßklemme 2 wird die Konushülse 3 in die Außenhülse 6 gedrückt, und zwar mit einer solchen Kraft, daß die
Haltekraft der Konusklemme etwas über der maximalen Zugspannung liegt, der der Isolator im Normalbetrieb ausgesetzt ist.
Danach wird der rohrförmige Teil des Abspannorgans 7 in die
Außenhülse 6 so weit eingeschraubt, bis ein Dichtungsring 12
fest zwischen der Trägerplatte 7' und dem ihr zugekehrten Ende
der Außenhülse 6 eingeklemmt ist und hier eine Dampfsperre
bildet. Anschließend wird am Übergang vom Fortsatz 6' der
Außenhülse 6 zum Kunststoffstab 1 eine Dampfsperre gebildet,
und zwar im Ausführungsbeispiel dadurch, daß ein Teil des
Fortsatzes und eine anschließende Zone des Kunststoffstabes mit
einem Dichtungsband 13 bewickelt werden. Zum Schluß wird die
Umhüllung 14 des Kunststoffstabes 1, welcher auch den Fortsatz 6! übergreift und aus Silikonkautschuk besteht, aufgebracht.

Für die Funktionsfähigkeit der Armatur ist es nicht notwendig, daß bei der Montage die Konushülse 3 mit der genannten Kraft in die Außenhülse 6 gerückt wird oder daß die bei der Montage erreichte Haltekraft aufrechterhalten bleibt, weil bei einer späteren Zugbelastung des Abspannisolators sich selbsttätig die Haltekraft der Konusklemme erhöht, falls sie zunächst nicht ausreichen sollte, weil dann, wenn die Konushülse 3 die Zugkraft nicht zu übertragen vermag, die Preßklemme 2 die Konushülse 3 so stark in die Außenhülse 6 drückt, bis die Konusklemme allein die Zugkraft zu übertragen vermag. Dies gilt auch für die Prüfung des Abspannisolators, die normalerweise mit dem 2 1/2 fachen Wert der maximalen Betriebszugbelastung erfolgt. Danach vermindert sich jedoch wieder die Haltekraft der Konusklemme wegen der fehlenden Selbsthemmung.

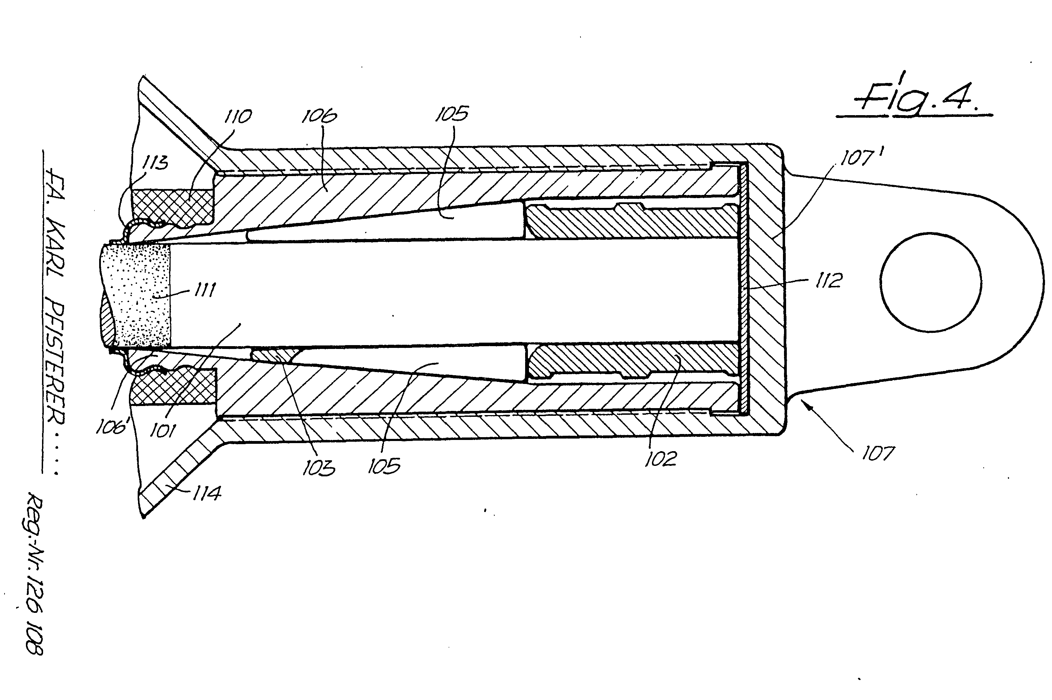

Das in Fig. 4 dargestellte, zweite Ausführungsbeispiel stimmt weitgehend mit dem ersten Ausführungsbeispiel überein. Daher sind im folgenden nur die Unterschiede erläutert. Wegen der übrigen Ausgestaltung wird auf die Ausführungen zu dem Ausführungsbeispiel gemäß den Fig. 1 bis 3 Bezug genommen.

Der wesentliche Unterschied besteht darin, daß die Preßklemme 102 den gleichen Innendurchmesser wie die Konushülse 103 hat, der Kunststoffstab 101 also an dem von der Armatur erfaßten Ende nicht abgesetzt zu sein braucht. Die Konusklemme 103 hat deshalb innen den gleichen Durchmesser wie die Preßklemme.

Unterschiedlich ist ferner gegenüber dem ersten Ausführungsbeispiel, daß die Preßklemme 102 und die Konushülse 103 getrennte Bauelemente sind, die Preßklemme 102 sich also nur an die ihr zugekehrte Stirnfläche der Konushülse anlegt.

Um der Klemmkraft der Konushülse 103 im Bereich ihres freien

- 1o. -

Endes zu vermindern, könnte,
wie bei dem ersten Ausführungsbeispiel der Innendurchmesser der Konushülse zu diesem Ende hin zunehmen. Im Ausführungsbeispiel ist jedoch statt dessen der Konuswinkel in diesem Endabschnitt etwas verkleinert, was natürlich auch eine entsprechende Verkleinerung des Konuswinkels im entsprechenden Endabschnitt der Außenhülse 106 bedeutet.

Ein weiterer Unterschied besteht darin, daß die Außenhülse 106 auf ihrer Außenseite über ihre gesamte Länge mit einem Gewinde versehen ist, auf das der rohrförmige Teil des Abspannorgans 107 aufgeschraubt wird. Dieser rohrförmige Teil erstreckt sich über die gesamte Länge der Außenhülse 106 und trägt an dem der Stirnwand 107' abgekehrten Ende einen Trichter, dessen nicht dargestellter, verdickter Rand einen Schirmring bildet.

Die Montage der Armatur erfolgt bei diesem Ausführungsbeispiel entsprechenderweise wie bei dem ersten Ausführungsbeispiel. Es werden also nach dem Aufbringen einer Leitlackschicht 111 auf den Kunststoffstab 101 die Außenhülse 106 über das zu erfassende Stabende geschoben und dann die Konushülse 1o3 und die Preßklemme 1o2 aufgesteckt. Danach wird die Preßklemme 102 verpreßt und die Konushülse 103 so weit in die Außenhülse 106 gedrückt, daß die Preßklemme 102 nicht mehr über die Außenhülse 106 übersteht. Nun kann der rohrförmige Teil des Abspannorgans 107 auf die Außenhülse aufgeschraubt werden, und zwar so weit, bis ein Dichtungsring 112 zwischen der Trägerplatte 107' und der ihr zugekehrten Stirnfläche der Außenhülse 106 festgeklemmt ist, um hier eine Dampfsperre zu bilden, die verhindert, daß Feuchtigkeit zwischen der Außenhülse 106 und dem rohrförmigen Teil des Abspannorgans 107 hindurch bis zur Stirnfläche des Kunststoffstabes 101 hin vordringen kann. Zum Abschluß wird die Dampfsperre 113 am Übergang vom Fortsatz 106' zum Kunststoffstab 101 angebracht, und zwar entweder durch ein Bewickeln mittels eines Dichtungsbandes oder durch ein Auftragen einer Dichtungsmasse. Danach kann der Kunststoffstab 101 mit der auch den Fortsatz 106' übergreifenden Umhüllung 110 versehen werden. Diese Umhüllung besteht aus Silikonkautschuk.

Sollte für das Anbringen der Umhüllung 110 die trichterförmige Verlängerung des rohrförmigen Teils des Abspannorgans 107, deren verdickter Rand einen Schirmring bildet, störend sein, dann kann das Aufschrauben des Abspannorgans 107 auf die Außenhülse 106 auch nach dem Anbringen der Umhüllung 110 erfolgen. Ferner wäre es möglich, den den Schirmring tragenden Trichter nicht an den rohrförmigen Teil des Abspannorgans 107 anzuformen, sondern mit einer Nabe zu versehen, mittels denen er auf dem rohrförmigen Teil festgeklemmt werden kann. Eine in dieser Weise ausgebildete Abschirmvorrichtung könnte auch dem Ausführungsbeispiel gemäß den Fig. 1 bis 3 zugeordnet sein. Ferner wäre es selbstverständlich möglich, die beschriebenen Ausführungsbeispiele so auszubilden, daß anders ausgebildete Abspannorgane verwendet werden könnten.

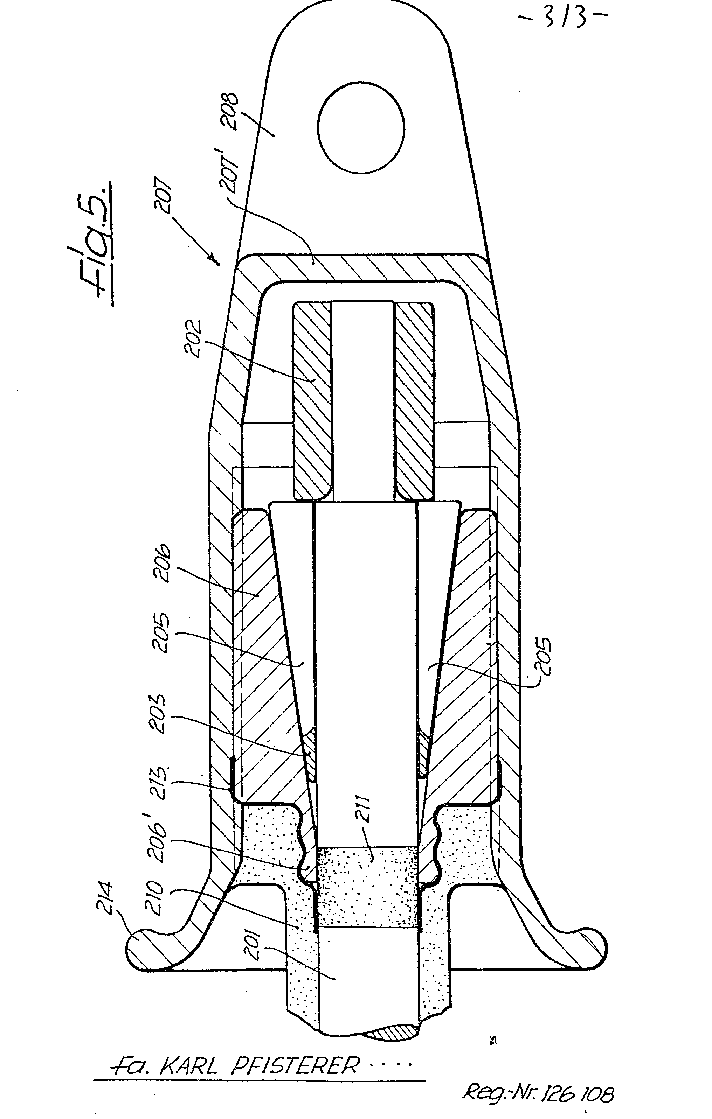

Auch das Ausführungsbeispiel gemäß Fig. 5 ist eine Abspannarmatur für einen Abspannisolator mit einem glasfaserverstärkten Kunststoffstab 2o1, das prinzipiell wie die Ausführungsbeispiele gemäß den Fig. 1 bis 4 ausgebildet ist, weshalb sich entsprechende Teile mit um 2oo bzw. 1oo größeren Bezugszahlen gekennzeichnet sind.

Die erste Klemme wir durch eine hülsenförmige Preßklemme 2o2 aus AlMgSiF2o gebildet, deren Innendurchmesser nur etwa 6o% des Außendurchmessers des Kunststoffstabes 2o1 beträgt, weil die Preßklemme auf einen entsprechend abgesetzten Endabschnitt des Kunststoffstabes aufgesetzt wird. Der Außendurchmesser der Preßklemme 2o2 ist größer als der Außendurchmesser des Kunststoffstabes 2o1, damit die dem freien Ende des Kunststoffstabes abgekehrte Stirnfläche der Preßklemme 2o2 an der im Durchmesser größeren Stirnfläche einer Konushülse 2o3 anliegen kann, deren Innendurchmesser an den vollen Außendurchmesser des Kunststoffstabes angepaßt ist. Die Konushülse 2o3 hat einen Konuswinkel von etwa $8^{o}$, ist also nicht selbsthemmend. Die axiale Länge der Konushülse hat nicht ganz

den dreifachen Wert des Innendurchmessers, und wie bei den vorbeschriebenen Ausführungsbeispielen weist die Konushülse mehrere in radialen Ebenen liegende Längsschlitze 2o5 auf, von denen nur einer sie vollständig durchtrennt, während die übrigen im Abstand von dem im Durchmesser kleineren Ende enden, wie Fig. 5 zeigt, so daß dort alle durch die Längsschlitze gebildeten Segmente miteinander verbunden sind.

Die Konushülse 2o3 wird von einer ebenfalls aus einer Aluminiumlegierung bestehenden Außenhülse 2o6 aufgenommen, deren Innenkonus an den Außenkonus der Konushülse angepaßt ist. Die axiale Länge der Außenhülse 2o6 ist etwas größer als diejenige der Konushülse 2o3, jedoch nimmt die Außenhülse 2o6 nicht auch die Preßklemme 2o2 auf. Die zylindrische Außenmantelfläche der Außenhülse 2o6 ist mit einem Außengewinde versehen, und an die den kleineren Innendurchmesser aufweisende Stirnseite ist gleichachsig ein Fortsatz 2o6' angeformt, der mit flachen Ringnuten versehen ist, damit sich eine gute Verbindung mit einer den Kunststoffstab 2o1 umgebenden und den Fortsatz 2o6' übergreifenden Umhüllung 21o aus Silikonkautschuk erreichen läßt.

Zwischen die Umhüllung 21o und die Außenmantelfläche des Fortsatzes 2o6' sowie ein Stück der sich an sie anschließenden Außenmantelfläche des Kunststoffstabes 2o1 und der Stirnseite der Außenhülse 2o6 sowie deren Außenmantelfläche ist eine Dampfsperre 213 eingelegt, die aus einem feuchtigkeitsundurchlässigen Material besteht und verhindert, daß Feuchtigkeit zu den Stirnflächen des Isolatorstabes 2o1 gelangen kann.

Wie bei den Ausführungsbeispielen gemäß den Fig. 1 bis 4 kann außerdem in einer teilweise vom Fortsatz 2o6' übergriffenen Ringzone des Kunststoffstabes 2o1 eine elektrisch leitende Schicht 211 auf den Kunststoffstab aufgebracht sein, um die Feldabsteuerung zu verbessern.

Auf das Außengewinde der Außenhülse 2o6 wird wie bei dem Ausführungsbeispiel gemäß Fig. 4 der rohrförmige Teil eines aus einer Aluminiumlegierung bestehenden Abspannorganes 2o7 aufge-

schraubt. Dieser röhrförmige Teil, der an seinem einen Ende durch eine Stirnwand 2o7' verschlossen ist, übergreift, wie Fig. 5 zeigt, im montierten Zustand sowohl die Preßklemme 2o2 als auch die Außenhülse 2o6 samt deren Fortsatz 2o6'. Daher kann sich der den Fortsatz 2o6' umfassende Endabschnitt der Umhüllung 21o an die Innenmantelfläche der Außenhülse anlegen. An die Stirnwand 2o7' ist eine Lasche 2o8 angeformt.

Das Abspannorgan 2o7 dient wie bei dem Ausführungsbeispiel gemäß Fig. 4 als Träger für einen Schirmring 214, der durch den verdickten Rand eines Trichters gebildet wird, welcher sich einstückig an das der Stirnwand 2o7' abgekehrte Ende des rohrförmigen Teils des Abspannorgans 2o7 anschließt. Die Montage der Armatur ist auch bei diesem Ausführungsbeispiel sehr einfach, weil nur nach dem Verpressen der Preßhülse 2o2 die Konushülse 2o3, an der Preßhülse 2o2 anliegend, in die Außenhülse 2o6 eingedrückt zu werden und dann das Abspannorgan auf die Außenhülse aufgeschraubt zu werden braucht. Die Anlage der Preßklemme 2o2 an der Konushülse 2o3 stellt dabei sicher, daß letztere stets mit der erforderlichen axialen Kraft in die Außenhülse 2o6 gedrückt wird, um zuverlässig die Zugbelastung vom Abspannorgan auf den Kunststoffstab übertragen zu können.

Patentansprüche

1. Armatur zur Herstellung einer mit hoher Zugkraft belastbare Verbindung mit einem glasfaserverstärkten Kunststoffstab, insbesondere einem Isolatorstab für Hochspannungs-Freileitungen, in einer den Endabschnitt des Kunststoffstabes erfassenden Klemme, dadurch gekennzeichnet, daß neben dieser ersten Klemme (2;102; 2o2) auf aeren vom benachbarten Ende des Isolierstabes (1;1o1;2o1) wegweisenden Seite eine Klemmhülse (3;1o3;2o3) einer Konusklemme (3,6;1o3,1o6;2o3,2o6) angeordnet ist, aeren die Klemmhülse (3;1o3) aufnehmendes Gehäuse (6;1o6;2o6) als Zugkraftübertragungsglied ausgebildet ist,und daß die Klemmhülse (3;1o3,2o3) und aie erste Klemme (2;1o2;2o2) sich zumindest mittelbar in axialer Richtung aufeinander abstützen.

2. Armatur nach Anspruch 1, dadurch gekennzeichnet, daß der Konuswinkel der Konusklemme (3,6;1o3,1o6;2o3;2o6) außerhalb des Selbsthemmungsbereiches liegt.

3. Armatur nach Anspruch 1 oder 2, dadurch gekennzeichnet, daß die erste Klemme eine Preßklemme (2;1o2;2o2) ist.

4. Armatur nach einem der Ansprüche 1 bis 3, dadurch gekennzeichnet, daß der Innendurchmesser der Preßklemme (2;2o2) kleiner ist als der Innendurchmesser der Klemmhülse (3;2o3).

5. Armatur nach einem der Ansprüche 1 bis 4, dadurch gekennzeichnet, daß die Klemmhülse (3;1o3) einstückig mit der ersten Klemme (2;1o2) ausgebildet ist.

6. Armatur nach Anspruch 5, dadurch gekennzeichnet, daß der Übergang von der Innenmantelfläche der Preßklemme (2) zur Innenmantelfläche der Klemmhülse (3) trichterförmig ausgebildet ist.

7. Armatur nach Anspruch 5 oder 6, dadurch gekennzeichnet, daß zwischen der Klemmhülse (3;103) und der Preßklemme (2;102) eine Ringzone mit einem im Vergleich zum Außendurchmesser der Preßklemme kleineren Außendurchmesser vorgesehen ist.

8. Armatur nach Anspruch 7, dadurch gekennzeichnet, daß die Ringzone außen durch eine an ihrem Grund ausgerundete Ringnut (4;104) begrenzt ist.

9. Armatur nach einem der Ansprüche 1 bis 8, dadurch gekennzeichnet, daß die Klemmhülse (3;103;203) mit mehreren Längsschlitzen (5;105;205) versehen ist, von denen einer sich über die gesamte Länge der Klemmhülse erstreckt und die anderen im Abstand von dem im Durchmesser kleineren Ende der Klemmhülse enden.

10. Armatur nach einem der Ansprüche 1 bis 9, dadurch gekennzeichnet, daß die Klemmhülse (3;103;203) in dem der Preßklemme (2;102;202) abgekehrten Endabschnitt eine verminderte Preßkraft infolge eines gegen das Ende hin größer werdenden Innendurchmessers und/oder eines verkleinerten Konuswinkels der Außenmantelfläche hat.

11. Armatur nach einem der Ansprüche 1 bis 10, dadurch gekennzeichnet, daß das als Hülse (6;106;207) ausgebildete Gehäuse der Konusklemme über das im Durchmesser größere Ende der Klemmhülse (3;103;203) übersteht und die erste Klemme (2;102; 202) zumindest auf einem Teil von deren Länge aufnimmt.

12. Armatur nach einem der Ansprüche 1 bis 11, gekennzeichnet durch eine den Zutritt von Feuchtigkeit zur Stirnfläche des Kunststoffstabes (1;101) verhindernde Dampfsperre (12, 13;112,113; 213).

Fig.1.

Fig.3.

Fig.2.

FA. KARL PFISTERER · · · ·

Reg.-Nr. 126 108

Fig. 4.

FA. KARL PFISTERER····

Reg.-Nr. 126 108

_Fig.5._

0038475

—3/3—